# EUROPEAN PATENT SPECIFICATION

(11) **EP 3 058 690 B1**
(45) Date of publication and mention of the grant of the patent: **23.05.2018**
(21) Application number: 14857957.6
(22) Date of filing: 23.10.2014
(51) Int. Cl.: G06F 17/30, H04L 29/02, G06F 7/00

(54) **SYSTEM AND METHOD FOR CREATING A DISTRIBUTED TRANSACTION MANAGER SUPPORTING REPEATABLE READ ISOLATION LEVEL IN A MPP DATABASE**
SYSTEM UND VERFAHREN ZUR ERZEUGUNG EINES VERTEILTEN TRANSAKTIONSMANAGERS FÜR WIEDERHOLBARE LESEISOLIERUNGSNIVEAUS IN EINER MPP-DATENBANK
SYSTÈME ET PROCÉDÉ DE CRÉATION D'UN GESTIONNAIRE DE TRANSACTIONS RÉPARTIES PRENANT EN CHARGE UN NIVEAU D'ISOLATION EN LECTURE RÉPÉTABLE DANS UNE BASE DE DONNÉES MPP

(30) Priority: 31.10.2013 US 201314068466
(43) Date of publication of application: 24.08.2016
(73) Proprietor: Huawei Technologies Co., Ltd., Longgang District Shenzhen, Guangdong 518129 (CN)
(72) Inventor: VARAKUR, Gangavara-Prasad, Danville, California 94526 (US)
(74) Representative: Gill Jennings & Every LLP
(86) International application number: PCT/CN2014/089321
(87) International publication number: WO 2015/062444

(56) References cited:
- EP-A2- 2 595 068
- CN-A- 103 116 596
- US-A1- 2009 254 693
- US-A1- 2012 011 100
- S Sudarshan: "Massively Parallel/Distributed Data Storage Systems", , 7 October 2012 (2012-10-07), XP055214942, Retrieved from the Internet: URL:http://www.cse.iitb.ac.in/~sudarsha/Ta lks/IBMSchool-Oct2012-Sudarshan.pptx [retrieved on 2015-09-21]

## Description

### FIELD OF INVENTION

The present invention relates generally to database systems, and, in particular, to a system and method for creating a distributed transaction manager supporting repeatable read isolation level in a massively parallel processing database.

### BACKGROUND

A massively parallel processing (MPP) database is a database where a large number of processors perform a set of computations in parallel. In a MPP system, a program is processed by multiple processors in a coordinated manner, with each processor working on a different part of the program and/or different data. The compute resources of a MPP system are distributed and running on different physical/virtual nodes. A MPP database system can be based on shared-nothing (SN) or shared disk (SD) architecture, with the tables of the databases partitioned into partitions and distributed to different processing nodes. For database queries, the tasks of each query are divided and assigned to the processing nodes according to the data distribution and an optimized execution plan. The processing entities in each processing node manage only their portion of the data. However, the processing entities may communicate with one another to exchange necessary information during execution.

A transaction in a MPP database might update or select data on one or more networked computer systems. A transaction is a logical grouping of a set of actions, including queries, such as selecting data, updating the data, inserting the data, and deleting the data. A transaction system that spans multiple nodes needs to have the global knowledge of the current active transactions. Such information is typically referred to as transaction "snapshot". This can be achieved by creating a centralized component that tracks snapshots globally for all the nodes. However, having a centralized component presents issues such as single point of failure (SPOF) and limiting scalability. An improved method for handling snapshots in a MPP database is needed.

US 2012/0011100 relates to snapshot acquisition processing technique. EP 2 595 068 relates to system and method of performing snapshot isolation in distributed databases.

### SUMMARY

The present invention provides methods for transaction processing according to claims 1 and 9, and cluster nodes for transaction processing according to claims 12 and 16. The remaining features of these aspects are defined in the corresponding dependent claims.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates an example of a massively parallel processing (MPP) database system;
Figure 2 illustrates an embodiment method of performing a transaction using a parent's snapshot in an MPP database system;
Figure 3 illustrates an embodiment method of executing a query using a parent's snapshot in an MPP database system;
Figure 4 illustrates an embodiment method of performing a transaction using a two phase protocol;
Figure 5 illustrates an embodiment method for generating and maintaining a global ID across all the branches of a transaction on involved remote nodes;
Figure 6 illustrates an embodiment method for executing each statement or query in a transaction on a local node;
Figure 7 illustrates an example of an inconsistent transaction state;
Figure 8 illustrates an embodiment method for snapshot reconciliation; and
Figure 9 illustrates a block diagram illustrating computing platform that may be used for implementing, for example, the devices and methods described herein, in accordance with an embodiment.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Transactions form the foundation for atomicity, consistency, isolation and durability (ACID) properties of database systems. A transaction can have multiple isolation levels. ACID properties ensure that database transactions are reliably processed. Atomicity requires that if one part of a transaction fails, the entire transaction fails, and the database remains unchanged. Consistency ensures that a transaction transitions the database from one valid state to another valid state. Isolation ensures that the result of concurrent execution of transactions is the same as if the transactions were performed in a serial order. Further, durability requires that once a transaction has been committed, all changes made by the transaction remain durable and permanent, and the transaction remains committed even if the transient states of the processor nodes are lost, for example as a result of power outage or crash.

To maintain ACID properties, the intermediate states between the steps of a transaction should not be visible to other concurrent transactions. For atomicity, if a failure occurs that prevents the transaction from completing, then none of the steps affect the database, ensuring that consistent data is seen by everyone. In a single node non-distributed database system there is one database management instance with the transaction manager that ensures the ACID properties by implementing strict two phase locking (SS2PL) or snapshots.

Metadata information of the data and the system is used to create a snapshot. Each row is appended with the transaction ID that modifies it. A snapshot is a list of current active transactions on the system. By using the snapshot, the transaction manager determines the visibility of data before executing any action. If the transaction ID pertains to any of the transactions in the snapshot list, data should not be visible, since the transaction is still active, and the intermediate states of the action should not be seen by other transactions.

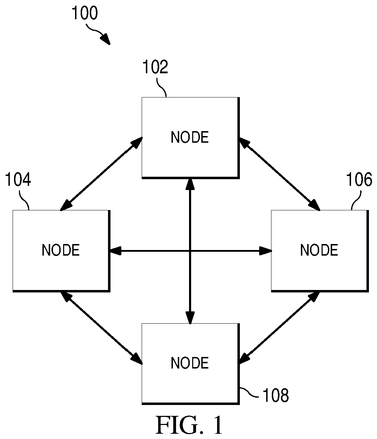

Figure 1 illustrates an example of a massively parallel processing (MPP) database system 100. System 100 illustrates a cluster or group of four nodes: first node 102, second node 104, third node 106, and fourth node 108. Each node may communicate with each other node. Four nodes are illustrated for clarity. However, in practice the computation cluster can include fewer or more nodes. The nodes may be any components configured to process transactions including queries. For instance, the nodes may be computer systems (e.g., server computers) connected over a communications network.

A distributed transaction is a transaction that performs an operation on two or more networked computer systems. In an example, a user may start a transaction on first node 102, and access data locally. If the transaction needs to access data on a remote node, such as on second node 104, a distributed transaction capability may be used to handle the transaction globally. In the case a centralized component maintains the state of all transactions, and thus maintains a global snapshot of the system, every transaction in the system may get a snapshot either at the beginning of the transaction or for each statement within the transaction depending on the isolation level of the transaction. Any transaction in the system transmits a request for a snapshot to the centralized component, which provides snapshots to the individual nodes of the system. However, such centralized component has issues regarding single point of failure (SPOF) and limiting scalability. The centralized component represents a SPOF since if this component fails, for some reason, it can stop the entire system from working. This is undesirable in any system with a goal of high availability or reliability. Further, the centralized component would limit scalability. Thus, a centralized transaction manager may be a potential bottleneck for the scale-out of the cluster and may jeopardize the high availability of the cluster.

Embodiments are provided herein to resolve such issues in handling snapshots of the system. Instead of a centralized component, the embodiments provide a distributed transaction manager supporting repeatable read isolation level in MPP database systems. The new model is a distributed model, where every node involved in the transaction plays a role without using one centralized component for this purpose. The model uses a method for keeping the snapshot information local to each of the nodes or processing units, thus providing a distributed implementation. In addition to supporting the repeatable read isolation level, the embodiments below also provide a read-committed isolation level. The read-committed isolation level can be supported according to algorithms described in U.S. Provisional Application No. 13/798,344 filed on March 13, 2013 by Tejeswar Mupparti et al. and entitled "System and Method for Performing a Transaction in a Massively Parallel Processing Database".

Although data may be scattered across the system, the distribution is transparent to the user. For transaction originated at one node, if non-local data is needed, the node transparently opens branches of the same transaction on remote nodes. Additionally, atomicity and durability may be satisfied by using an implicit two phase commit (2PC) protocol, ensuring that, although data is modified and accessed across multiple nodes, all units of work are logically tied to one unit. In 2PC, a global transaction ID is assigned by the transaction manager (TM) to each resource manager (RM). In an example, the node where the parent transaction originated becomes the TM, and the branch transaction nodes become the RMs. Any node may be a transaction manager or a resource manager, depending on the particular transaction. The TM coordinates the decision to commit or rollback with each RM. Further, a local transaction ID is assigned by each RM. The TM adds the node name as a suffix to the parent transaction ID to obtain the global transaction ID for all branches of the transaction, ensuring that the global transaction ID is unique. For example, if a transaction is started on first node 102, first node 102 becomes the TM. Data accessed non-locally, residing on a remote node, may be executing under a new remote transaction. These new remote transactions are branches of the same parent transaction. When the client uses an explicit commit, the TM coordinates with the RMs a 2PC protocol to commit or rollback all the branches of the parent transaction.

Additionally, to ensure isolation consistency for the transaction, a parent transaction first identifies all required nodes for running the transaction. Subsequently, at the start time of the transaction, the parent transaction collects the snapshot information from all the remote nodes that are involved in the transactions. All of these snapshots are reconciled to eliminate any inconsistencies, and a new snapshot is constructed. This newly constructed snapshot is transmitted back to the participant nodes of this transaction, which is used by all the nodes to execute the statements of the transactions. This ensures that all the systems involved in the transaction see the same consistent view of the data and adhere to REPETABLE READ isolation level. The model may also be extended to the SERIALIZIBLE isolation level.

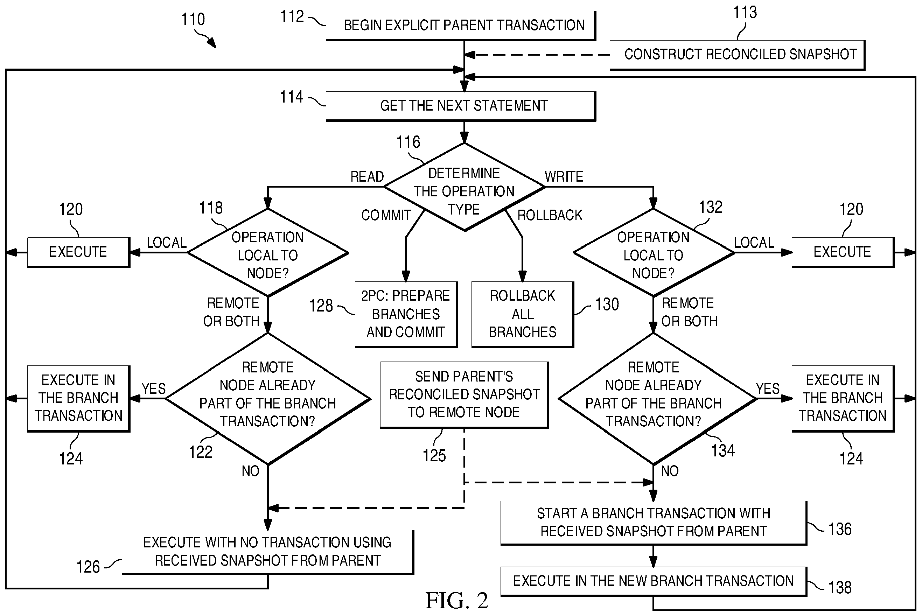

Figure 2 illustrates an embodiment method 110 of performing a transaction using a parent transaction's snapshot. The method 110 can be implemented by any node in a cluster, for example in any node in the MPP database system 100, which becomes the TM. Initially, in step 112, an explicit parent transaction begins. In step 113, a reconciled snapshot is constructed for the current transaction, which includes all currently active transactions in all participating nodes, and in step 114 the next statement is acquired. The operation type is then determined in step 116. If the operation type is a commit operation, all branches are prepared, the transaction is ended using two phase commit (2PC) protocol, and the changes become visible in step 128. However, if the operation type is a rollback, a rollback is performed on all branches, and the MPP system is returned to a previous state in step 130.

On the other hand, if the operation type is determined to be a read, the step 118 determines whether the operation is local to a node. If the operation is local to the node, the read operation is executed in step 120, and the system returns to step 114. If the read operation is remote or occurs both remotely and locally, then it is determined in step 122 if the remote node is already a part of the branch transaction. A branch transaction at the remote node or RM is a transaction started by a parent transaction at an originating node or TM in order to process data at the remote node for the parent transaction. If the remote node is already part of the branch transaction, the branch transaction is executed in step 124, and the system returns to step 114. However, if the remote node is not already part of the branch transaction, the parent transaction's reconciled snapshot is sent to the remote node in step 125. Next, in step 126, the read command is executed using the received snapshot from a parent transaction. The remote node does not directly use the received reconciled snapshot from the master node. Instead, the remote node first translates the received reconciled snapshot by transforming the master transaction IDs in the received reconciled snapshot to local traction IDs for the remote node, as described below. The system then returns to step 114.

Similarly, if the operation type is determined to be a write operation, step 132 determines if the operation is local to a node. If the operation is local to the node, the write command is executed in step 120, and the system returns to step 114. However, if the operation is remote or both local and remote, the system goes to step 134, where it determines if the remote node is already part of the branch transaction. If the remote node is already part of the branch transaction, the branch transaction is executed in step 124, and the system returns to step 114. However, if the remote node is not part of the branch transaction, the parent transaction's reconciled snapshot is sent to the remote node in step 125. Next, in step 136, a new branch transaction is started with the received snapshot from a parent transaction. Then, the new branch transaction is executed in step 138, and the system returns to step 114. The system obtains the next statement in step 114. The system continues to get new statements until a commit or rollback is performed.

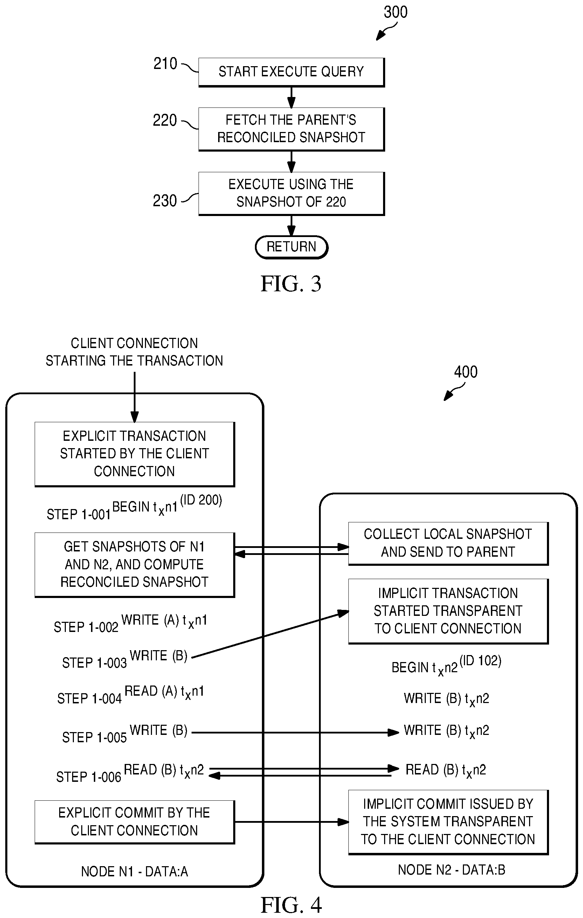

Figure 3 illustrates an embodiment method 300 of executing a query using a parent's snapshot in an MPP database system. The method 300 can be implemented as part of any of the steps 124, 126, and 138. In step 210, query execution is started. In step 220, the parent transaction's snapshot is fetched. The query is then executed using the fetched parent transaction's snapshot. The method 300 then returns to the corresponding subsequent steps in method 200 above.

Figure 4 illustrates an embodiment method 400 using a two phase protocol with implicit branch transactions, which can be implemented on any node in the MPP database system. Initially, a first node N1 has non-shared data A and second node N2 has non-shared data B. A client connection is sent to first node N1, and starts explicit transaction tₓn1 having a transaction ID of 200. At step 1-001, a begin command initiates the transaction. Tₓn1 is the parent transaction, and first node N1 acts as the TM. In this example, the parent transaction involves modifying and accessing data A and data B. The first node N1 generates a global ID (GID) for the transaction by appending the node's logical name to the transaction ID. For example, the global ID is Tnode-n1-200 by adding the first node name N1 to the transaction ID 200. The GID is guaranteed to be unique across the cluster. The first node N1 generates the global ID when the node determines that the transaction spans multiple nodes. As part of this protocol, the parent transaction discovers all participating nodes for the transaction, collects local snapshots from them, and computes the reconciled snapshot. At step 1-002, a Write(A) command is performed, which writes data locally. Operation or command Write(A) is carried out in the context of tₓn1 on first node N1. At step 1-003, Write(B), a write operation on data B in second node N2 is performed. For this operation, an implicit transaction tₓn2 with a local transaction ID 102 is started on second node N2 using the reconciled snapshot from first node N1. The transaction tₓn2 is a branch of tₓn1. Next, Read(A) is performed at step 1-004, which is a read operation on local data A. Read(A) is carried on in the local transaction's context tₓn1 on first node N1. At step 1-005, a Write(B) operation is performed on data B, and at step 1-006, a Read(B) operation is performed on data B. Both operations are performed on second node N2 in the transaction tₓn2, which is already open.

Next, a commit command is issued explicitly by the client. First node N1 recognizes itself as the TM and the commit operation is automatically transformed into a two phase commit (2PC) protocol by first node N1. When a branch transaction is opened, the global ID is transmitted to other nodes along with the request to create a branch transaction. Now, the transactions tₓn1 and tₓn2 are prepared in the first phase of 2PC using the global ID Tnode-nl-200. Finally, responses are combined, and the second phase of committing is issued by first node N1.

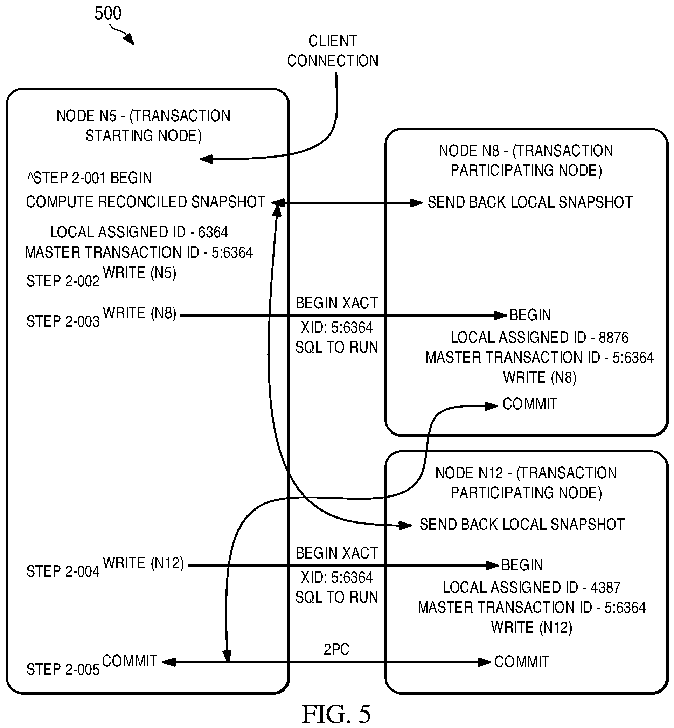

Figure 5 illustrates an embodiment method 500 for generating and maintaining a GID across all the branches of a transaction on involved nodes. The GID uniquely identifies each transaction in a cluster of nodes and associates all individual units of a transaction into one logical unit. In a traditional transaction manager every single transaction is identified by a unique ID. In the method 500, every transaction is identified as a transaction pair of a master transaction ID and a local transaction ID. The master transaction ID is assigned by the parent transaction, and the local transaction ID is the transaction ID assigned by the local transaction manager. The master transaction ID is a GID generated by appending the node number to the local transaction ID, as described above. This ensures that master transaction ID is globally unique across the cluster.

In the method 500, a transaction is explicitly started on first node N5 by a client connection. Thus, the first node N5 is the TM, and is assigned a local transaction ID, for instance 6364. The automatically generated global transaction ID is 5:6364, which is created by appending node number "5" to the local transaction ID 6364. At step 2-001, the node N5 computes a reconciled snapshot for all the other nodes, N8 and N12 in this example. The reconciled snapshot is sent back to the other nodes (N8 and N12). The reconciled snapshot is subsequently used to perform individual transactions at each of the three nodes. At step 2-002, a Write(N5) command, which is a local write operation on node N5, is performed and executed in the context of <5:6364, 6364>. At step 2-003, Write(N8) is a remote operation performed on a second node N8. Accordingly, an implicit transaction is opened on node N8, and the local transaction manager of node N8 is assigned a local transaction ID of 8876. This new transaction is a branch of the parent transaction, and it obtains a master transaction ID from the parent transaction. In this example, the master transaction ID is 5:6364. Hence, the remote operation is executed in the context of <5:6364, 8876>.

At step 2-004, the operation Write(N12) is a remote transaction performed on a third node N12. Thus, a new branch transaction is opened on node N12, which obtains the same master transaction ID, 5.6364, as the parent transaction. This master transaction ID, also referred to herein as a global transaction ID, forms a pair with the local transaction ID 4387 of node N12. The operation Write(N12) is thus executed in the context of <5:6364, 4387>. At step 2-005, a commit operation deploys an implicit 2PC protocol to commit on all three nodes (N5, N8, and N12). The parent transaction 6364 is committed on node N5, branch transaction 8876 is committed on node N8, and branch transaction 4387 is committed on node N12. Although the parent and its branches execute on individual node as individual transactions, by assigning all transactions a pair of IDs, where the master or global transaction ID is common to all the transaction pairs, the transactions are identified as part of the same global transaction.

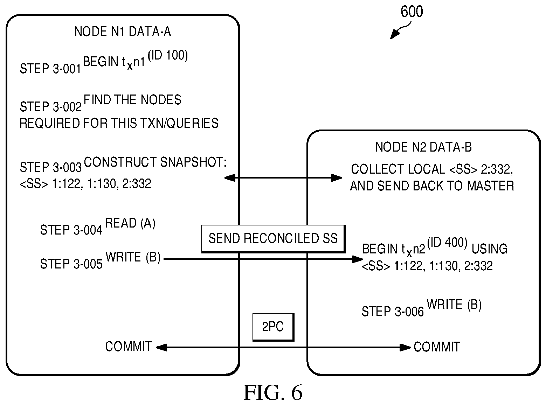

In a distributed environment, a single statement of a transaction may be executed on one node, for example "select coll from table where coll = data-on-local-node." Alternatively, a single statement may be executed on more than one node, for example "select coll from table where TRUE." Figure 6 illustrates an embodiment method 600 where each query in the transaction can be completely executed locally on a single node. For example, any of the select, update, insert, and delete operations involve only one node, not multiple nodes. A snapshot, which is a list of active transactions at any time, is used by the TM to ensure proper isolation levels. The snapshot helps hiding from a current transaction the intermediate states of other current active transactions. For instance, every node maintains its snapshot using a local transaction ID with additional metadata to identify the corresponding master or global transaction ID for each local transaction ID.

At step 3-001, a transaction tₓn1 having a local transaction ID of 100 is started on first node N1. The step 3-002 analyses the statements in the transaction to find all required nodes for the transaction. This can be achieved using various database objects (e.g., table and/or partition) names used in the statements. In another scheme, internally maintained metadata catalogs are consulted to learn the nodes where the corresponding database objects exist. For example, the catalog may have information such as table T1 exists on node N1 only, table T2 exists on node N2 only, and table T3 exists on both N1 and N2. In some cases, the predicates used in the statement queries are used to find the nodes. For example, it can be assumed that table T1 is partitioned into two parts based on a particular column's value being even or odd. For example, a query such as SELECT * FROM T1 WHERE COL = 5, would need to run only on node N2, as the column 'col' value is an odd number. On the other hand, if the query is SELECT * FROM T1 WHERE COL > 5, then the query analyzer may recognize that both nodes N1 and N2 are needed for this transaction.

Once the list of potentially participating nodes for the transaction are found, step 3-003 computes the global snapshot with which the transaction statements should be executed on corresponding nodes with REPEATABLE READ isolation level. This snapshot is a list of all active transactions on all participating nodes, represented in the global/master format, which is *nodeID:local_transaction_number.* Node N1 gets the snapshot <S1> 122, 130. The transactions with ID's 122, 130 are considered currently running on node N1. Any data modified by these transactions should not be seen by the transaction tₓn1. Similarly, Node N1 requests node N2 to send its local snapshot, and receives <S2> 372. Then a reconciled snapshot is computed which dictates what are the list of active transactions for this transaction across all participating nodes. Details of computing the reconciled global snapshot are explained below. Further, each node transforms the global snapshot to its local format when a local transaction is opened on respective nodes. At step 3-003, the Read(A) operation runs with the locally computed reconciled snapshot to ensure the REPEATABLE READ isolation. The next step 3-005, the Write(B) operation initiates a remote transaction tₓn2 (ID 400) on node N2 and forwards the query statement and the reconciled snapshot to the node N2. The transaction tₓn2 ensures the REPEATABLE READ isolation for statements run on node N2. Finally, a commit operation deploys an implicit 2PC protocol to commit on both nodes N1 and N2.

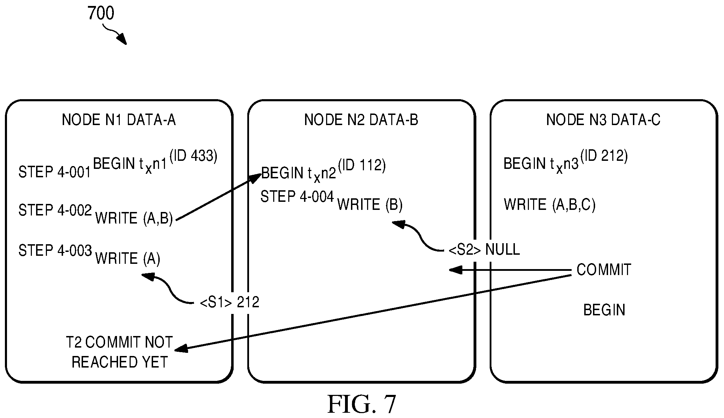

Figure 7 illustrates an example of an inconsistent transaction state 700. A transaction can see the inconsistent state in certain conditions, such as if all local snapshots are not properly reconciled. A transaction tₓn1 involves a query that is executed on both first node N1 and second node N2. At step 4-001, the transaction tₓn1, having a transaction ID of 433, is started on first node N1. At step 4-002, a command Write(A,B) involves the modification of data on both first node N1 and second node N2. Hence, a new transaction tₓn2 having a transaction ID of 112 is opened on second node N2. This step is divided into two and is executed as steps 4-003 on N1 and 4-004 on N2. Simultaneously, there is another transaction tₓn3 having a transaction ID 212 executing concurrently on nodes N1, N2, and third node N3 in the final commit phase. The transaction tₓn3 is already prepared and committed on node N2, but has not yet committed on node N1. At this time, in step 4-003 on node N1, a snapshot is requested and <S1> 212 is given: since 212 is still active, it is showing up in the snapshot. However, in step 4-004 on second node 104, the snapshot given is <S2> NULL, because 212 has already been completed on second node N2. If the query of Write(A,B) in step 4-002 is executed using local snapshots, then there is an inconsistent state, where transaction ID 212 appears as committed on second node N2 but not on first node N1. As such, the same query sees the data modified by ID 212 on node N2 but not on node N1.

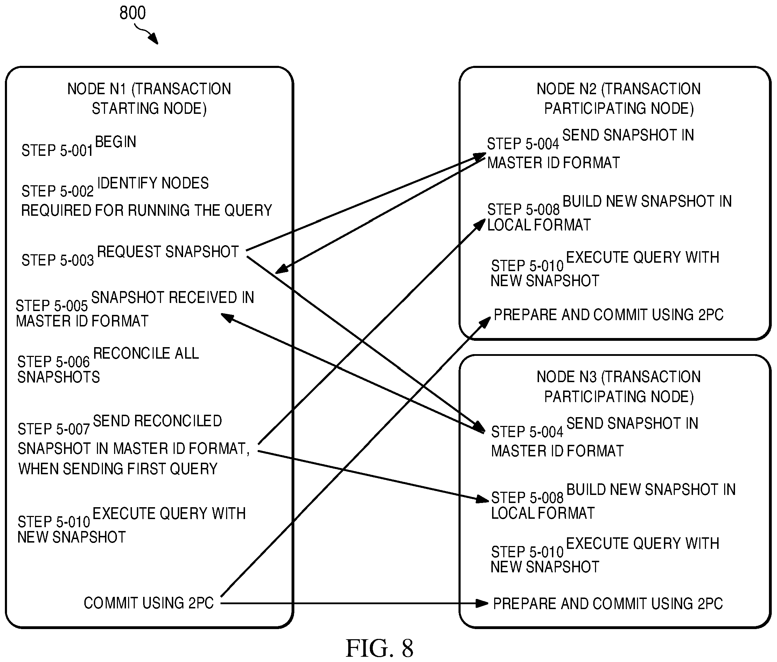

To eliminate such inconsistencies and handle these types of scenarios, a snapshot reconciliation method can be implemented. Figure 8 illustrates an embodiment method 800 for snapshot reconciliation to eliminate inconsistencies, such as described for the inconsistent transaction state 700. At step 5-001, a transaction is started on node N1 with a query that needs to be executed on all nodes N1, N2, and N3. At step 5-002, the master node or TM, N1, analyzes the query and computes the list of participating nodes for the query. At step 5-003, before starting query execution, N1 sends a snapshot request message to all the participating nodes (all nodes where the statement will be executed), which include nodes N2 and N3. At step 5-004, all participating nodes, N2 and N3, take the latest snapshot and transmit back to N1 the snapshot in master ID format. This means, for all the active transactions, the master transaction IDs are transmitted. Thus, a list of transaction IDs currently running locally on each node are transmitted. At step 5-005, the master node N1 receives all the snapshots from the participating nodes, N2 and N3. At step 5-006, node N1 forms a reconciled list of all the snapshots (list of IDs) of nodes N2 and N3, thus generating a new list of IDs which is the joining (union set) of the lists from all participating nodes. The transaction IDs received by N1 from N2 and N3 are in master transaction ID format. Thus, the new list includes the master transaction ID of each locally running transaction at each node.

At step 5-007, the master node N1 transmits the reconciled snapshot list to the participating nodes, N2 and N3. The reconciled snapshot may be forwarded once piggybacked on the first query sent to any participating node. At step 5-008, all the participating nodes receive the reconciled snapshot list in master ID format, and then convert it into local format. This means, for every master transaction ID in the reconciled list, a corresponding local transaction ID is retrieved, e.g., as described in method 500. The conversion of the reconciled snapshot from the global to local format involves a step of adjustment to eliminate inconsistencies. In this adjustment step, participating nodes take an intersection of the reconciled snapshot with the snapshot sent to the TM in step 5-004. For any transaction that was not part of the intersection, two possibilities exist. Either the current node never participated in the transaction, or the node participated in the transaction, but sees it as active on other nodes. If the current node never participated in the transaction, this transaction ID can be ignored. However, if the node participated in the transaction, the new transaction ID is further included as a part of the newly constructed snapshot, to ensure that if one node is not seeing the effects of a transaction, then none of the nodes will see it. At step 5-009, the TM transmits the query to all the participating nodes. At step 5-010, the participating nodes execute the query using the newly constructed snapshot of step 5-008. Finally, a commit operation deploys an implicit 2PC protocol to commit on nodes N1, N2, and N3.

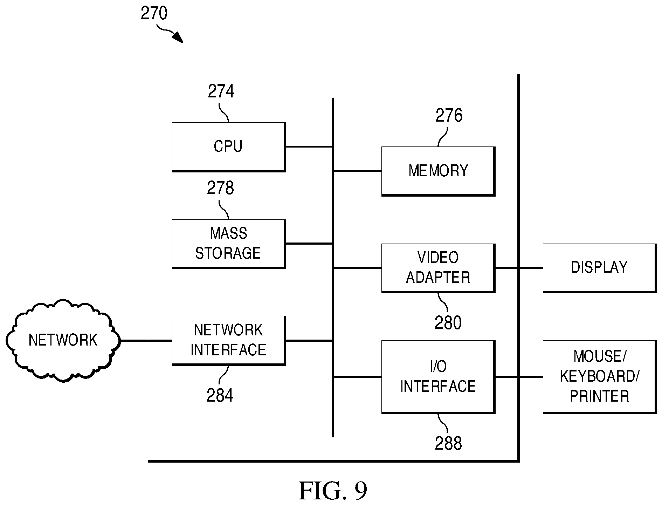

Figure 9 illustrates a block diagram of processing system 270 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input devices, such as a microphone, mouse, touchscreen, keypad, keyboard, and the like. Also, processing system 270 may be equipped with one or more output devices, such as a speaker, a printer, a display, and the like. The processing unit may include central processing unit (CPU) 274, memory 276, mass storage device 278, video adapter 280, and I/O interface 288 connected to a bus.

The bus may be one or more of any type of several bus architectures including a memory bus or memory controller, a peripheral bus, video bus, or the like. CPU 274 may comprise any type of electronic data processor. Memory 276 may comprise any type of system memory such as static random access memory (SRAM), dynamic random access memory (DRAM), synchronous DRAM (SDRAM), read-only memory (ROM), a combination thereof, or the like. In an embodiment, the memory may include ROM for use at boot-up, and DRAM for program and data storage for use while executing programs.

Mass storage device 278 may comprise any type of storage device configured to store data, programs, and other information and to make the data, programs, and other information accessible via the bus. Mass storage device 278 may comprise, for example, one or more of a solid state drive, hard disk drive, a magnetic disk drive, an optical disk drive, or the like.

Video adaptor 280 and I/O interface 288 provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface card (not pictured) may be used to provide a serial interface for a printer.

The processing unit also includes one or more network interface 284, which may comprise wired links, such as an Ethernet cable or the like, and/or wireless links to access nodes or different networks. Network interface 284 allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise.

## Claims

1. A method (110), by a first node, for transaction processing between processing nodes in a cluster of a massively parallel processing (MPP) database system, the method comprising:
identifying, before starting a transaction, a second node involved in the transaction;
requesting, from the second node, a snapshot of current transactions at the second node;
receiving, from the second node, the snapshot of current transactions at the second node;
combining, into a reconciled snapshot, the received snapshot of current transactions from the second node with current transactions at the first node;
transmitting the reconciled snapshot to the second node; and
starting the transaction using the reconciled snapshot;
wherein, the method further comprises:
triggering, using the transaction at the first node, a branch transaction at the second node;
upon ending the transaction, performing a two phase commit (2PC) protocol between the first node and the second node; and
combining results of the transaction and the branch transaction.

2. The method of claim 1 further comprising analyzing one or more statements and database objects in the transaction to identify all nodes involved in the transaction.

3. The method of claim 1 further comprising consulting one or more internally maintained metadata catalogs to identify all nodes involved in the transaction.

4. The method of claim 1 further comprising using one or more predicates in one or more statement queries of the transaction to identify all nodes involved in the transaction.

5. The method of any of claims 1 to 4, wherein the transmitted reconciled snapshot includes a list of master IDs and metadata of the current transactions at the first node and the second node, and wherein each one of the master IDs is assigned by a corresponding local transaction manager node by appending a local transaction ID assigned by the local transaction manager node to a node number indicating the local transaction manager node.

6. The method of any of claims 1 to 5, wherein the received snapshot from the second node includes a list of master IDs and metadata of the current transactions at the second node, and wherein each one of the master IDs is assigned by a corresponding local transaction manager node by appending a local transaction ID assigned by the local transaction manager node to a node number indicating the local transaction manager node.

7. The method of claim 1 further comprising:
identifying a third node involved in the transaction;
requesting, from the third node, a snapshot of current transactions at the third node;
receiving, from the third node, the snapshot of current transactions at the third node;
combining into the reconciled snapshot, the received snapshot of current transactions from the third node with the received snapshot of transactions from the second node and the current transactions at the first node; and
transmitting the reconciled snapshot to both the second node and the third node.

8. The method of claim 7, wherein the received snapshot from the third node includes a list of master IDs and metadata of the current transactions at the third node, and wherein each one of the master IDs is assigned by a corresponding local transaction manager node by appending a local transaction ID assigned by the local transaction manager node to a node number indicating the local transaction manager node.

9. A method (300), by a first node, for transaction processing between processing nodes in a cluster of a massively parallel processing (MPP) database system, the method comprising:
receiving a request for a snapshot of current transactions at the first node, wherein the request is received from a second node of the MPP database system upon identifying the first node to be involved in the transaction and before starting the transaction at the second node;
sending, to the second node, the snapshot of current transactions at the first node;
receiving (220), from the second node, a reconciled snapshot combining the snapshot of current transactions at the first node and the second node;
starting a branch transaction triggered by the transaction at the second node;
performing (230) the branch transaction in accordance with the reconciled snapshot;
upon ending the branch transaction at the first node, preparing the branch transaction for a commit command from the second node; and
performing a two phase commit (2PC) protocol between the first node and the second node.

10. The method of claim 9, wherein the received reconciled snapshot includes a list of master IDs and metadata of the current transactions at the first node and the second node, and wherein the method further comprises converting the master IDs to local IDs by the first node before starting the branch transaction.

11. The method of claim 9 or 10 further comprising:
identifying any transaction indicated in the reconciled snapshot and not current at the second node; and
performing one of ignoring the indicated transaction in the reconciled snapshot if the indicated transaction is not previously executed at the first node, or including the indicated transaction in the reconciled snapshot if the indicated transaction is previously executed at the first node.

12. A cluster node (270) for transaction processing in a massively parallel processing (MPP) database, the cluster node comprising:
at least one processor (274); and
a non-transitory computer readable storage medium (276) storing programming for execution by the at least one processor, the programming including instructions to:
identify, before starting a transaction, a second cluster node involved in the transaction;
request, from the second cluster node, a snapshot of current transactions at the second cluster node;
receive, from the second cluster node, the snapshot of current transactions at the second cluster node;
combine, into a reconciled snapshot, the received snapshot of current transactions from the second cluster node with current transactions at the cluster node;
transmit the reconciled snapshot to the second cluster node; and
start the transaction using the reconciled snapshot;
wherein the programming includes further instructions to:
trigger, using the transaction, a branch transaction at the second cluster node;
upon ending the transaction, perform a two phase commit (2PC) protocol between the cluster node and the second cluster node; and
combine results of the transaction and the branch transaction.

13. The cluster node of claim 12, wherein the programming includes further instructions to at least one of analyze one or more statements and database objects in the transaction, consult one or more internally maintained metadata catalogs, and use one or more predicates in one or more statement queries of the transaction to identify all nodes involved in the transaction.

14. The cluster node of claim 12 or 13, wherein the received snapshot from the second cluster node includes a list of IDs and metadata of the current transactions at the second cluster node, wherein the transmitted reconciled snapshot includes a list of master IDs and metadata of the current transactions at the cluster node and the second cluster node, and wherein each one of the master IDs is assigned by a corresponding local transaction manager node by appending a local transaction ID assigned by the local transaction manager node to a node number indicating the local transaction manager node.

15. The cluster node of any of claims 12 to 14, wherein the programming includes further instructions to exchange the snapshot of transactions between the cluster node and the second cluster node without a centralized cluster transaction manager.

16. A cluster node (270) for participating in transaction processing in a massively parallel processing (MPP) database, the cluster node comprising:
at least one processor (274); and
a non-transitory computer readable storage medium (276) storing programming for execution by the at least one processor, the programming including instructions to:
receive a request for a snapshot of current transactions at the cluster node,
wherein the request is received from a second cluster node upon identifying the cluster node to be involved in the transaction and before starting the transaction at the second cluster node;
send, to the second cluster node, the snapshot of current transactions at the cluster node;
receive, from the second cluster node, a reconciled snapshot combining the snapshot of current transactions at the cluster node and the second cluster node;
start a branch transaction triggered by the transaction at the second cluster node;
perform the branch transaction in accordance with the reconciled snapshot;
upon ending the branch transaction, prepare the branch transaction for a commit command from the second cluster node; and
perform a two phase commit (2PC) protocol between the cluster node and the second cluster node.

17. The cluster node of claim 16, wherein the programming includes further instructions to:
identify any transaction indicated in the reconciled snapshot and not current at the cluster node; and
perform one of ignoring the indicated transaction in the reconciled snapshot if the indicated transaction is not previously executed at the cluster node, or including the indicated transaction in the reconciled snapshot if the indicated transaction is previously executed at the cluster node.

18. The cluster node of claim 16 or 17, wherein the received reconciled snapshot includes a list of master IDs and metadata of the current transactions at the cluster node and the second cluster node, and wherein the programming includes further instructions to convert the master IDs to local IDs by the cluster node before starting the branch transaction.

## Patentansprüche

1. Verfahren (110), durch einen ersten Knoten, zur Transaktionsverarbeitung zwischen Verarbeitungsknoten in einem Cluster eines "Massively-Parallel-Processing(MPP)"-Datenbanksystems, wobei das Verfahren Folgendes umfasst:
vor Starten einer Transaktion Identifizieren eines zweiten in der Transaktion involvierten Knotens;
Anfordern, vom zweiten Knoten, eines Schnappschusses aktueller Transaktionen am zweiten Knoten;
Empfangen, vom zweiten Knoten, des Schnappschusses aktueller Transaktionen am zweiten Knoten;
Kombinieren des empfangenen Schnappschusses aktueller Transaktionen vom zweiten Knoten mit aktuellen Transaktionen am ersten Knoten zu einem abgestimmten Schnappschuss;
Übertragen des abgestimmten Schnappschusses an den zweiten Knoten; und
Starten der Transaktion unter Verwendung des abgestimmten Schnappschusses;
wobei das Verfahren weiter Folgendes umfasst:
Auslösen einer Verzweigungstransaktion am zweiten Knoten unter Verwendung der Transaktion am ersten Knoten;
nach Beenden der Transaktion Durchführen eines "Two-Phase-Commit(2PC)"-Protokolls zwischen dem ersten Knoten und dem zweiten Knoten; und
Kombinieren von Ergebnissen der Transaktion und der Verzweigungstransaktion.

2. Verfahren nach Anspruch 1, das weiter Analysieren eines oder mehrerer Statements und Datenbankobjekte bei der Transaktion, um alle in der Transaktion involvierten Knoten zu identifizieren, umfasst.

3. Verfahren nach Anspruch 1, das weiter Durchsuchen eines oder mehrerer intern geführter Metadatenkataloge, um alle in der Transaktion involvierten Knoten zu identifizieren, umfasst.

4. Verfahren nach Anspruch 1, das weiter Verwenden eines oder mehrerer Prädikate bei einer oder mehreren Statement-Abfragen der Transaktion, um alle in der Transaktion involvierten Knoten zu identifizieren, umfasst.

5. Verfahren nach einem der Ansprüche 1 bis 4, wobei der übertragene abgestimmte Schnappschuss eine Liste von Master-IDs und Metadaten der aktuellen Transaktionen am ersten Knoten und am zweiten Knoten enthält und wobei jede der Master-IDs durch einen entsprechenden lokalen Transaktionsmanagerknoten durch Anhängen einer durch den lokalen Transaktionsmanagerknoten zugewiesenen lokalen Transaktions-ID an eine den lokalen Transaktionsmanagerknoten anzeigende Knotennummer zugewiesen wird.

6. Verfahren nach einem der Ansprüche 1 bis 5, wobei der empfangene Schnappschuss vom zweiten Knoten eine Liste von Master-IDs und Metadaten der aktuellen Transaktionen am zweiten Knoten enthält und wobei jede der Master-IDs durch einen entsprechenden lokalen Transaktionsmanagerknoten durch Anhängen einer durch den lokalen Transaktionsmanagerknoten zugewiesenen lokalen Transaktions-ID an eine den lokalen Transaktionsmanagerknoten anzeigende Knotennummer zugewiesen wird.

7. Verfahren nach Anspruch 1, das weiter Folgendes umfasst:
Identifizieren eines dritten in der Transaktion involvierten Knotens;
Anfordern, vom dritten Knoten, eines Schnappschusses aktueller Transaktionen am dritten Knoten;
Empfangen, vom dritten Knoten, des Schnappschusses aktueller Transaktionen am dritten Knoten;
Kombinieren des empfangenen Schnappschusses aktueller Transaktionen vom dritten Knoten mit dem empfangenen Schnappschuss von Transaktionen vom zweiten Knoten und den aktuellen Transaktionen am ersten Knoten zum abgestimmten Schnappschuss; und
Übertragen des abgestimmten Schnappschusses sowohl an den zweiten Knoten als auch an den dritten Knoten.

8. Verfahren nach Anspruch 7, wobei der empfangene Schnappschuss vom dritten Knoten eine Liste von Master-IDs und Metadaten der aktuellen Transaktionen am dritten Knoten enthält und wobei jede der Master-IDs durch einen entsprechenden lokalen Transaktionsmanagerknoten durch Anhängen einer durch den lokalen Transaktionsmanagerknoten zugewiesenen lokalen Transaktions-ID an eine den lokalen Transaktionsmanagerknoten anzeigende Knotennummer zugewiesen wird.

9. Verfahren (300), durch einen ersten Knoten, zur Transaktionsverarbeitung zwischen Verarbeitungsknoten in einem Cluster eines "Massively-Parallel-Processing(MPP)"-Datenbanksystems, wobei das Verfahren Folgendes umfasst:
Empfangen einer Anforderung eines Schnappschusses aktueller Transaktionen am ersten Knoten, wobei die Anforderung nach Identifizieren des ersten in der Transaktion zu involvierenden Knotens und vor Starten der Transaktion an einem zweiten Knoten vom zweiten Knoten des MPP-Datenbanksystems empfangen wird;
Senden des Schnappschusses aktueller Transaktionen am ersten Knoten an den zweiten Knoten;
Empfangen (220) eines abgestimmten Schnappschusses, der den Schnappschuss aktueller Transaktionen am ersten Knoten und am zweiten Knoten kombiniert, vom zweiten Knoten;
Starten einer durch die Transaktion am zweiten Knoten ausgelösten Verzweigungstransaktion;
Durchführen (230) der Verzweigungstransaktion gemäß dem abgestimmten Schnappschuss;
nach Beenden der Verzweigungstransaktion am ersten Knoten Vorbereiten der Verzweigungstransaktion für einen "Commit"-Befehl vom zweiten Knoten; und
Durchführen eines "Two-Phase-Commit(2PC)"-Protokolls zwischen dem ersten Knoten und dem zweiten Knoten.

10. Verfahren nach Anspruch 9, wobei der empfangene abgestimmte Schnappschuss eine Liste von Master-IDs und Metadaten der aktuellen Transaktionen am ersten Knoten und am zweiten Knoten enthält und wobei das Verfahren weiter Umwandeln der Master-IDs in lokale IDs durch den ersten Knoten vor Starten der Verzweigungstransaktion umfasst.

11. Verfahren nach Anspruch 9 oder 10, das weiter Folgendes umfasst:
Identifizieren einer beliebigen im abgestimmten Schnappschuss angezeigten und nicht aktuellen Transaktion am zweiten Knoten; und
Durchführen entweder eines Ignorierens der angezeigten Transaktion im abgestimmten Schnappschuss, wenn die angezeigte Transaktion nicht zuvor am ersten Knoten ausgeführt wird, oder eines Aufnehmens der angezeigten Transaktion in den abgestimmten Schnappschuss, wenn die angezeigte Transaktion zuvor am ersten Knoten ausgeführt wird.

12. Clusterknoten (270) zur Transaktionsverarbeitung in einer "Massively-Parallel-Processing(MPP)"-Datenbank, wobei der Clusterknoten Folgendes umfasst:
mindestens einen Prozessor (274); und
ein nichtflüchtiges, computerlesbares Speichermedium (276), das eine Programmierung zur Ausführung durch den mindestens einen Prozessor speichert,
wobei die Programmierung Anweisungen enthält, um:
vor Starten einer Transaktion einen zweiten in der Transaktion involvierten Clusterknoten zu identifizieren;
einen Schnappschuss aktueller Transaktionen am zweiten Clusterknoten vom zweiten Clusterknoten anzufordern;
den Schnappschuss aktueller Transaktionen am zweiten Clusterknoten vom zweiten Clusterknoten zu empfangen;
den empfangenen Schnappschuss aktueller Transaktionen vom zweiten Clusterknoten mit aktuellen Transaktionen am Clusterknoten zu einem abgestimmten Schnappschuss zu kombinieren;
den abgestimmten Schnappschuss an den zweiten Clusterknoten zu übertragen; und
die Transaktion unter Verwendung des abgestimmten Schnappschusses zu starten;
wobei die Programmierung weitere Anweisungen zu Folgendem enthält:
Auslösen einer Verzweigungstransaktion am zweiten Clusterknoten unter Verwendung der Transaktion;
nach Beenden der Transaktion Durchführen eines "Two-Phase-Commit(2PC)"-Protokolls zwischen dem Clusterknoten und dem zweiten Clusterknoten; und
Kombinieren von Ergebnissen der Transaktion und der Verzweigungstransaktion.

13. Clusterknoten nach Anspruch 12, wobei die Programmierung weitere Anweisungen zum Analysieren eines oder mehrerer Statements und Datenbankobjekte bei der Transaktion und/oder zum Durchsuchen eines oder mehrerer intern geführter Metadatenkataloge und/oder zum Verwenden eines oder mehrerer Prädikate bei einer oder mehreren Statement-Abfragen der Transaktion, um alle in der Transaktion involvierten Knoten zu identifizieren, enthält.

14. Clusterknoten nach Anspruch 12 oder 13, wobei der empfangene Schnappschuss vom zweiten Clusterknoten eine Liste von IDs und Metadaten der aktuellen Transaktionen am zweiten Clusterknoten enthält, wobei der übertragene abgestimmte Schnappschuss eine Liste von Master-IDs und Metadaten der aktuellen Transaktionen am Clusterknoten und am zweiten Clusterknoten enthält und wobei jede der Master-IDs durch einen entsprechenden lokalen Transaktionsmanagerknoten durch Anhängen einer durch den lokalen Transaktionsmanagerknoten zugewiesenen lokalen Transaktions-ID an eine den lokalen Transaktionsmanagerknoten anzeigende Knotennummer zugewiesen wird.

15. Clusterknoten nach einem der Ansprüche 12 bis 14, wobei die Programmierung weitere Anweisungen zum Austauschen des Schnappschusses von Transaktionen zwischen dem Clusterknoten und dem zweiten Clusterknoten ohne einen zentralen Clustertransaktionsmanager enthält.

16. Clusterknoten (270) zur Beteiligung an Transaktionsverarbeitung in einer "Massively-Parallel-Processing(MPP)"-Datenbank, wobei der Clusterknoten Folgendes umfasst:
mindestens einen Prozessor (274); und
ein nichtflüchtiges, computerlesbares Speichermedium (276), das eine Programmierung zur Ausführung durch den mindestens einen Prozessor speichert,
wobei die Programmierung Anweisungen enthält, um:
eine Anforderung eines Schnappschusses aktueller Transaktionen am Clusterknoten zu empfangen, wobei die Anforderung nach Identifizieren des in der Transaktion zu involvierenden Clusterknotens und vor Starten der Transaktion an einem zweiten Clusterknoten vom zweiten Clusterknoten empfangen wird;
den Schnappschuss aktueller Transaktionen am Clusterknoten an den zweiten Clusterknoten zu senden;
einen abgestimmten Schnappschuss, der den Schnappschuss aktueller Transaktionen am Clusterknoten und am zweiten Clusterknoten kombiniert, vom zweiten Clusterknoten zu empfangen;
eine durch die Transaktion am zweiten Clusterknoten ausgelöste Verzweigungstransaktion zu starten;
die Verzweigungstransaktion gemäß dem abgestimmten Schnappschuss durchzuführen;
nach Beenden der Verzweigungstransaktion die Verzweigungstransaktion für einen "Commit"-Befehl vom zweiten Clusterknoten vorzubereiten; und
ein "Two-Phase-Commit(2PC)"-Protokoll zwischen dem Clusterknoten und dem zweiten Clusterknoten durchzuführen.

17. Clusterknoten nach Anspruch 16, wobei die Programmierung weitere Anweisungen zu Folgendem enthält:
Identifizieren einer beliebigen im abgestimmten Schnappschuss angezeigten und nicht aktuellen Transaktion am Clusterknoten; und
Durchführen entweder eines Ignorierens der angezeigten Transaktion im abgestimmten Schnappschuss, wenn die angezeigte Transaktion nicht zuvor am Clusterknoten ausgeführt wird, oder eines Aufnehmens der angezeigten Transaktion im abgestimmten Schnappschuss, wenn die angezeigte Transaktion zuvor am Clusterknoten ausgeführt wird.

18. Clusterknoten nach Anspruch 16 oder 17, wobei der empfangene abgestimmte Schnappschuss eine Liste von Master-IDs und Metadaten der aktuellen Transaktionen am Clusterknoten und am zweiten Clusterknoten enthält und wobei die Programmierung weitere Anweisungen zum Umwandeln der Master-IDs in lokale IDs durch den Clusterknoten vor Starten der Verzweigungstransaktion enthält.

## Revendications

1. Procédé (110), par un premier noeud, permettant un traitement de transactions entre des noeuds de traitement dans un cluster d'un système de base de données de traitement massivement parallèle (MPP), le procédé comprenant les étapes suivantes :
identifier, avant de commencer une transaction, un deuxième noeud impliqué dans la transaction ;
demander, par le deuxième noeud, un aperçu des transactions courantes au niveau du deuxième noeud ;
recevoir, à partir du deuxième noeud, l'aperçu des transactions courantes au niveau du deuxième noeud ;
combiner, en un aperçu rapproché, l'aperçu reçu des transactions courantes à partir du deuxième noeud avec les transactions courantes au niveau du premier noeud ;
transmettre l'aperçu rapproché au deuxième noeud ; et
commencer la transaction en utilisant l'aperçu rapproché ;
le procédé comprenant en outre :
déclencher, en utilisant la transaction au niveau du premier noeud, une transaction de branche au niveau du deuxième noeud ;
à la fin de la transaction, exécuter un protocole de validation 2 phases (2PC) entre le premier noeud et le deuxième noeud ; et
combiner les résultats de la transaction et de la transaction de branche.

2. Procédé selon la revendication 1 comprenant en outre : analyser une ou plusieurs instructions et un ou plusieurs objets de base de données dans la transaction pour identifier tous les noeuds impliqués dans la transaction.

3. Procédé selon la revendication 1 comprenant en outre : consulter un ou plusieurs catalogues de métadonnées maintenus en interne pour identifier tous les noeuds impliqués dans la transaction.

4. Procédé selon la revendication 1 comprenant en outre : utiliser un ou plusieurs prédicats dans une ou plusieurs requêtes d'instructions de la transaction pour identifier tous les noeuds impliqués dans la transaction.

5. Procédé selon l'une quelconque des revendications 1 à 4, dans lequel l'aperçu rapproché transmis comporte une liste d'ID maîtres et de métadonnées des transactions courantes au niveau du premier noeud et du deuxième noeud, et chacun des ID maîtres étant affecté par un noeud gestionnaire de transactions locales correspondant en ajoutant un ID de transaction locale affecté par le noeud gestionnaire de transactions locales à un numéro de noeud indiquant le noeud gestionnaire de transactions locales.

6. Procédé selon l'une quelconque des revendications 1 à 5, dans lequel l'aperçu reçu à partir du deuxième noeud comporte une liste d'ID maîtres et de métadonnées des transactions courantes au niveau du deuxième noeud, et chacun des ID maîtres étant affecté par un noeud gestionnaire de transactions locales correspondant en ajoutant un ID de transaction locale affecté par le noeud gestionnaire de transactions locales à un numéro de noeud indiquant le noeud gestionnaire de transactions locales.

7. Procédé selon la revendication 1 comprenant en outre :
identifier un troisième noeud impliqué dans la transaction ;
demander, par le troisième noeud, un aperçu des transactions courantes au niveau du troisième noeud ;
recevoir, à partir du troisième noeud, l'aperçu des transactions courantes au niveau du troisième noeud ;
combiner en l'aperçu rapproché, l'aperçu reçu des transactions courantes à partir du troisième noeud avec l'aperçu reçu des transactions à partir du deuxième noeud et des transactions courantes au niveau du premier noeud ; et
transmettre l'aperçu rapproché au deuxième noeud ainsi qu'au troisième noeud.

8. Procédé selon la revendication 7, dans lequel l'aperçu reçu à partir du troisième noeud comporte une liste d'ID maîtres et de métadonnées des transactions courantes au niveau du troisième noeud, et chacun des ID maîtres étant affecté par un noeud gestionnaire de transactions locales correspondant en ajoutant un ID de transaction locale affecté par le noeud gestionnaire de transactions locales à un numéro de noeud indiquant le noeud gestionnaire de transactions locales.

9. Procédé (300), par un premier noeud, permettant un traitement de transactions entre des noeuds de traitement dans un cluster d'un système de base de données de traitement massivement parallèle (MPP), le procédé comprenant :
recevoir une requête d'un aperçu des transactions courantes au niveau du premier noeud, la requête étant reçue à partir d'un deuxième noeud du système de base de données MPP lors de l'identification du premier noeud devant être impliqué dans la transaction et avant de commencer la transaction au niveau du deuxième noeud ;
envoyer, au deuxième noeud, l'aperçu des transactions courantes au niveau du premier noeud ;
recevoir (220), à partir du deuxième noeud, un aperçu rapproché combinant l'aperçu des transactions courantes au niveau du premier noeud et du deuxième noeud ;
commencer une transaction de branche déclenchée par la transaction au niveau du deuxième noeud ;
exécuter (230) la transaction de branche selon l'aperçu rapproché ;
à la fin de la transaction de branche au niveau du premier noeud, préparer la transaction de branche pour une commande de validation du deuxième noeud ; et
exécuter un protocole de validation 2 phases (2PC) entre le premier noeud et le deuxième noeud.

10. Procédé selon la revendication 9, dans lequel l'aperçu rapproché reçu comporte une liste d'ID maîtres et de métadonnées des transactions courantes au niveau du premier noeud et du deuxième noeud, et le procédé comprenant en outre : convertir les ID maîtres en ID locaux par le premier noeud avant de commencer la transaction de branche.

11. Procédé selon la revendication 9 ou 10 comprenant en outre :
identifier une transaction indiquée dans l'aperçu rapproché et non courante au niveau du deuxième noeud ; et
exécuter une action parmi ignorer la transaction indiquée dans l'aperçu rapproché si la transaction indiquée n'a pas été exécutée précédemment au niveau du premier noeud, ou inclure la transaction indiquée dans l'aperçu rapproché si la transaction indiquée a été exécutée précédemment au niveau du premier noeud.

12. Noeud de cluster (270) permettant un traitement de transactions dans une base de données de traitement massivement parallèle (MPP), le noeud de cluster comprenant :
au moins un processeur (274) ; et
un support de stockage non transitoire lisible par ordinateur (276) stockant une programmation pour une exécution par l'au moins un processeur, la programmation comportant des instructions destinées à :
identifier, avant de commencer une transaction, un deuxième noeud de cluster impliqué dans la transaction ;
demander, par le deuxième noeud de cluster, un aperçu des transactions courantes au niveau du deuxième noeud de cluster ;
recevoir, à partir du deuxième noeud de cluster, l'aperçu des transactions courantes au niveau du deuxième noeud de cluster ;
combiner, en un aperçu rapproché, l'aperçu reçu des transactions courantes à partir du deuxième noeud de cluster avec les transactions courantes au niveau du noeud de cluster ;
transmettre l'aperçu rapproché au deuxième noeud de cluster ; et
commencer la transaction en utilisant l'aperçu rapproché ;
la programmation comportant en outre des instructions destinées à :
déclencher, en utilisant la transaction, une transaction de branche au niveau du deuxième noeud de cluster ;
à la fin de la transaction, exécuter un protocole de validation 2 phases (2PC) entre le noeud de cluster et le deuxième noeud de cluster ; et
combiner les résultats de la transaction et de la transaction de branche.

13. Noeud de cluster selon la revendication 12, dans lequel la programmation comporte en outre des instructions permettant d'exécuter au moins une action parmi analyser une ou plusieurs instructions et un ou plusieurs objets de base de données dans la transaction, consulter un ou plusieurs catalogues de métadonnées maintenus en interne, et utiliser un ou plusieurs prédicats dans une ou plusieurs requêtes d'instructions de la transaction pour identifier tous les noeuds impliqués dans la transaction.

14. Noeud de cluster selon la revendication 12 ou 13, dans lequel l'aperçu reçu à partir du deuxième noeud de cluster comporte une liste d'ID et de métadonnées des transactions courantes au niveau du deuxième noeud de cluster, l'aperçu rapproché transmis comportant une liste d'ID maîtres et de métadonnées des transactions courantes au niveau du noeud de cluster et du deuxième noeud de cluster, et chacun des ID maîtres étant affecté par un noeud gestionnaire de transactions locales correspondant en ajoutant un ID de transaction locale affecté par le noeud gestionnaire de transactions locales à un numéro de noeud indiquant le noeud gestionnaire de transactions locales.

15. Noeud de cluster selon l'une quelconque des revendications 12 à 14, dans lequel la programmation comporte en outre des instructions permettant d'échanger l'aperçu des transactions entre le noeud de cluster et le deuxième noeud de cluster sans un gestionnaire de transactions de cluster centralisé.

16. Noeud de cluster (270) permettant de participer à un traitement de transactions dans une base de données de traitement massivement parallèle (MPP), le noeud de cluster comprenant :
au moins un processeur (274) ; et
un support de stockage non transitoire lisible par ordinateur (276) stockant une programmation pour une exécution par l'au moins un processeur, la programmation comportant des instructions destinées à :
recevoir une requête d'un aperçu des transactions courantes au niveau du noeud de cluster, la requête étant reçue à partir d'un deuxième noeud de cluster lors de l'identification du noeud de cluster devant être impliqué dans la transaction et avant de commencer la transaction au niveau du deuxième noeud de cluster ;
envoyer, au deuxième noeud de cluster, l'aperçu des transactions courantes au niveau du noeud de cluster ;
recevoir, à partir du deuxième noeud de cluster, un aperçu rapproché combinant l'aperçu des transactions courantes au niveau du noeud de cluster et du deuxième noeud de cluster ;
commencer une transaction de branche déclenchée par la transaction au niveau du deuxième noeud de cluster ;
exécuter la transaction de branche selon l'aperçu rapproché ;
à la fin de la transaction de branche, préparer la transaction de branche pour une commande de validation du deuxième noeud de cluster ; et
exécuter un protocole de validation 2 phases (2PC) entre le noeud de cluster et le deuxième noeud de cluster.

17. Noeud de cluster selon la revendication 16, dans lequel la programmation comporte en outre des instructions destinées à :
identifier une transaction quelconque indiquée dans l'aperçu rapproché et non courante au niveau du noeud de cluster ; et
exécuter une action parmi ignorer la transaction indiquée dans l'aperçu rapproché si la transaction indiquée n'a pas été exécutée précédemment au niveau du noeud de cluster, ou inclure la transaction indiquée dans l'aperçu rapproché si la transaction indiquée a été exécutée précédemment au niveau du noeud de cluster.

18. Noeud de cluster selon la revendication 16 ou 17, dans lequel l'aperçu rapproché reçu comporte une liste d'ID maîtres et de métadonnées des transactions courantes au niveau du noeud de cluster et du deuxième noeud de cluster, et la programmation comportant en outre des instructions permettant de convertir les ID maîtres en ID locaux par le noeud de cluster avant de commencer la transaction de branche.
